# EUROPEAN PATENT SPECIFICATION

(11) **EP 1 753 968 B1**
(45) Date of publication and mention of the grant of the patent: **28.03.2012**
(21) Application number: 04733071.7
(22) Date of filing: 14.05.2004
(51) Int. Cl.: F16D 65/092

(54) **A DISK BRAKE**
SCHEIBENBREMSE
FREIN A DISQUE

(43) Date of publication of application: 21.02.2007
(73) Proprietor: Freni Brembo S.p.A., 24035 Curno (Bergamo) (IT)
(72) Inventor: GOTTI, Antonio, I-24031 Almenno San Bartolomeo (Bergamo) (IT); PAGNI, Marco, I-20065 Inzago (IT)
(74) Representative: Leihkauf, Steffen Falk
(86) International application number: PCT/IT2004/000272
(87) International publication number: WO 2005/111455

(56) References cited:
- DE-A1- 1 907 832
- DE-A1- 1 908 635
- DE-A1- 4 416 815
- FR-A- 1 357 517
- FR-A- 1 367 190

## Description

The present invention relates to a disk brake as well as a pad and a calliper for such a disk brake.

There are known disk brakes whose pads are of substantially rectangular shape, in which the front edge and the rear edge of the pad constitute reaction surfaces which, depending on whether the braking is effected with forward or backward motion, abut corresponding front or rear walls of a suitable seat of the calliper body.

There are further known disk brakes whose pads are connected to the calliper at or in the vicinity of their rear side, when viewed in the direction of rotation of the brake disk, and are free to oscillate within given limits about the connection point. During braking with forward motion, the pad which is held at the connection point is mainly subjected to tensile stress, whereas, during braking with backward motion, the pad abuts this connection point and is consequently subjected to compression stress.

DE 1 908 635 discloses a disk brake according to the preamble of claim 1.

The pads and callipers of the prior art, while being advantageous from various perspectives, are subject to troublesome vibrations, rattling and noise and the pads demonstrate non-uniform wear of the friction material and therefore a shorter service life.

Therefore, the object of the present invention is to provide a disk brake as well as a pad and a calliper for such a brake having features which can prevent the disadvantages of the known solutions.

The above object is achieved by means of a disk brake according to claim 1 and a pad for a disk brake according to claim 10.

For a better understanding of the invention and in order to appreciate the advantages thereof, some exemplary and non-limiting embodiments thereof will be described below with reference to the appended Figures, in which:
Figure 1 is a sectioned view of a disk brake according to one embodiment of the invention;
Figure 2 is a front view of a pad of the disk brake in Figure 1;
Figure 3 is a sectioned view of a pad of the disk brake in Figure 1;
Figure 4 is a sectioned view of a disk brake according to a second embodiment of the invention;
Figure 5 is a front view of a pad of the disk brake in Figure 4;
Figure 6 is a sectioned view of a calliper of the disk brake in Figure 4;
Figure 7 is a schematic representation of the forces acting in a zone of the disk brake according to the invention.

With reference to the Figures, a disk brake, in particular for use in motor vehicles, is generally designated 1. In this specific case, it is a disk brake of the fixed calliper type.

The disk brake 1 comprises a calliper 2 and a brake disk 3. The calliper 2 is fixed to a vehicle suspension by means of fixing screws and the brake disk 3. which is provided with an annular braking band 4 can be connected to the wheel hub of the vehicle.

The calliper 2 comprises two lateral walls 5 which are arranged at either side of the disk 3 and which are connected to each other by means of connection elements 6 which extend astride the braking band 4, which passes through the calliper 2 in the direction of arrow F with forward motion of the vehicle and in the opposite direction, indicated by means of arrow B, with backward motion of the vehicle.

In the present description and claims, the front side of the pads is understood to be the side at which the braking band leaves the space between the pads and the rear side of the pads is understood to be the side at which the braking band enters the space between the pads when the brake disk rotates in the forward direction F.

At least two pads 7 which are each constituted by a plate 8, for example, of steel, carrying a coating of friction material 9, are each arranged at one side of the brake disk 3 in the region of the braking band 4 and are received in an unlosable manner in suitable seats 10 of the calliper 2.

The pads 7 which can be moved axially, or in other words in a direction perpendicular to the plane of the brake disk 3, can be acted upon by thrust means, such as, for example, one or more hydraulic cylinder/piston units 32 which are arranged in the walls 5 of the calliper 2 so as to clamp, by means of the friction coating 9, a region of the braking band 4 whose surface area and shape correspond to that of the friction coatings 9.

Abutment means are associated with each pad 7 and bear, under the effect of the braking force which is tangential to the braking band 4 and which is produced during braking, against corresponding counter-abutment means of the calliper 2.

In order to prevent the pads 7 from rattling in the seats 10 during motion of the vehicle when the brakes are not being operated, one or more resilient elements or pad springs 11 are provided and apply a resilient preload to the pads 7 in order to retain them in the seats 10 thereof.

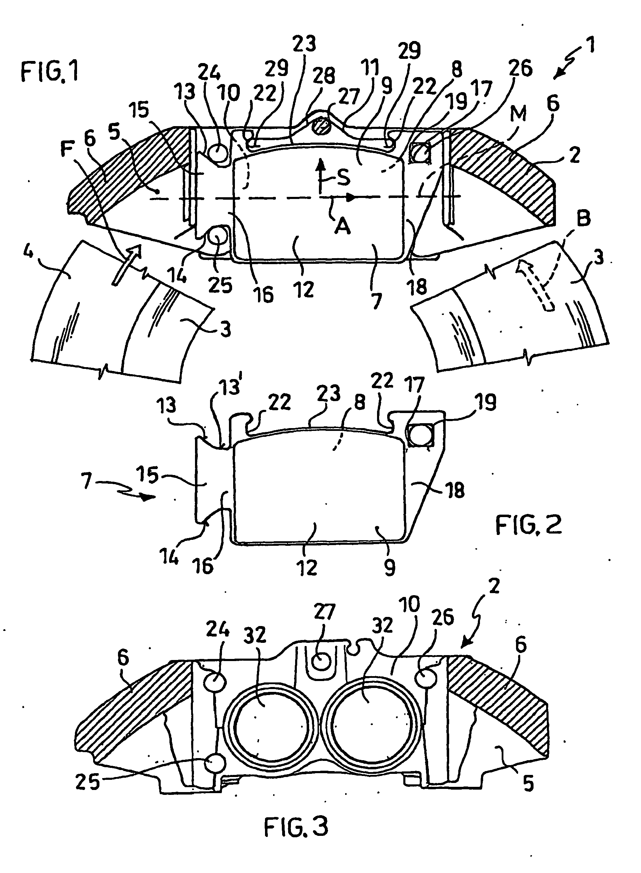

With reference to Figure 2, the plate 8 of the pad 7 illustrated is substantially planar and has an approximately rectangular central portion 12, on which the friction coating 9 is arranged. The pad 7 is provided with two abutment surfaces 13, 14 which are preferably arranged in the rear side of the plate 8, relative to the forward direction of rotation F of the disk 3 and which are intended to bear, under the effect of braking force A, against suitable counter-abutment means of the calliper 2 which will be described below.

The two abutment surfaces 13, 14 are preferably planar and mutually inclined so as to be able to produce, during braking, a wedging effect together with the counter-abutment means.

In this regard, it is important for at least one of the abutment surfaces 13, 14 to be inclined, preferably at an acute angle, relative to the direction of braking force A (that is to say, the resultant friction force tangential to the braking band 4) and for preferably both the abutment surfaces 13, 14 to be non-perpendicular to the above-mentioned direction of braking force A.

The following forces act on each of the two abutment surfaces 13, 14 in response to braking force A and owing to the wedging effect:
a reaction force R relative to the braking force having the same direction as and the opposite sense to the braking force and
. at least one supporting force P which is perpendicular to the reaction force R.

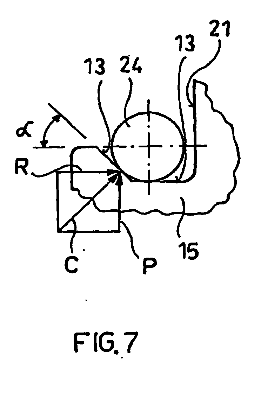

Whereas the reaction forces R of both the abutment surfaces 13, 14 are added together, the effect of the supporting forces P is cancelled out. However, a contact force C which results from the vector addition C² = R² + P² which is greater than the reaction force R acts on each support surface 13, 14, as will be appreciated from Figure 7.

Owing to this large contact force C, for a given friction coefficient a large transverse friction force (substantially perpendicular to the plane of the brake disk 3) is produced, which effectively prevents any movement of the pad 7 and therefore the occurrence of vibrations thereof.

According to one embodiment, the pad 7 comprises a support piece 15 which is substantially of dovetail-like form and which defines two mutually opposed seats, each forming one of the two abutment surfaces 13, 14.

The two abutment surfaces preferably define together an angle 2a of between 10° and 160°, preferably of between 50° and 100° and even more preferably of approximately 90°.

According to the embodiments shown in the Figures, the dovetail-like support piece 15 is formed at the rear side 16 of the pad 7 relative to the forward direction of rotation F of the brake disk and tapers starting from the outside towards the central portion 12 of the plate 8.

Such an arrangement results in a so-called tensioned support of the pad 7, which support is further strengthened by the clamping owing to the wedging effect.

The dovetail-like piece 15 is advantageously formed and arranged in a substantially symmetrical manner relative to a centre line M of the pad 7 which coincides substantially with the direction of the resultant braking force A (friction force tangential to the braking band 4).

The invention further provides that the pad 7 is provided with a third abutment surface 17 which is arranged at the side of the pad 7 opposite that forming the first abutment surface 13 and second abutment surface 14, or the support piece 15. The third abutment surface 17 is formed at the front side 18 of the pad 7, when viewed in the forward direction of rotation F of the brake disk 3.

Similarly, the third abutment surface 17 is arranged so as to bear against corresponding counter-abutment means of the calliper 2 in order further to stabilise the pad 7.

According to the embodiment referred to in Figures 1 and 2, the third abutment surface is formed by the inner surface of an eyelet 19, which is preferably rectangular with rounded corners and which is formed on the plate 8 at the front side of the pad 7.

The position and the dimensions of the eyelet 19 are advantageously selected in such a manner that, during braking with backward motion, the pad 7 engages by means of the eyelet 19 with the counter-abutment means of the calliper 2 which are associated therewith and is therefore completely taut.

According to one embodiment, the eyelet 19 is arranged approximately at the height of the upper limit of the friction coating 9.

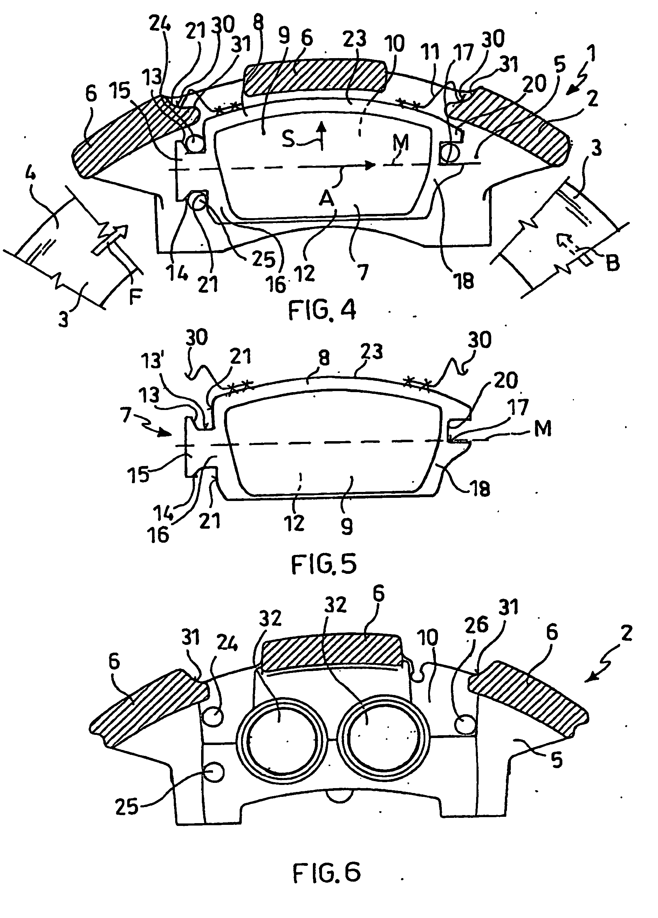

According to a second embodiment, shown, for example, in Figures 4 and 5, the third abutment surface 17 is formed by the inner surface of a jaw 20, which is preferably U-shaped, rectangular and has rounded corners, and which is formed by the plate 8 at the front side of the pad 7.

The jaw 20 is advantageously open (in a circumferential direction) towards the outer side of the front side 18 of the pad 7 and the third abutment surface 17 has at least one portion which is substantially parallel, and preferably coincident, with the action line of the braking force A.

The position and the dimensions of the jaw 20 are selected in such a manner that, during braking with backward motion, the jaw 20 and the associated counter-abutment means of the calliper 2 form a guide for the pad 7. This guide allows at least one, preferably two, support surface(s) 21 which is/are arranged at the rear side 16 of the pad 7 to be positioned in a controlled manner against corresponding counter-abutment means of the calliper 2.

According to one embodiment, the jaw 20 is arranged near the upper edge (radially outer edge relative to the brake disk 3) of the pad 7.

The pad 7 further comprises at least one, preferably two, seat(s) 22 for one or more spring(s) 11. These seats are preferably formed so as to allow resilient urging of the pad 7 upwards, or, in other words, in the radially outward direction relative to the brake disk 3.

The spring seats 22 are advantageously formed on the upper edge 23 (radially outer edge) of the pad 7, for example, in the form of two hooks.

An alternative solution provides that one or more, preferably two, spring(s) 11 is/are connected in a substantially unlosable manner to the pad 7, for example, in the vicinity of the upper edge 23 (radially outer edge) thereof. This connection is advantageously effected by means of riveting or welding.

The pads springs 11 have, in addition to the portion connected to or supported on the pad 7, at least one portion which can be positioned against a suitable seat of the calliper 2 so as to urge the pad 7 resiliently upwards, that is to say, radially outwards relative to the brake disk, into a predetermined position, in which at least one of the two abutment surfaces 13, 14 of the dovetail-like piece 15 and the third abutment surface 17 of the jaw 20 or eyelet 19 bear against the counter-abutment means of the calliper.

The dovetail-like piece 15 advantageously forms a surface having a first portion 13' which is substantially parallel with the action line M of the braking force A. A second portion 13 which is inclined relative to the first portion 13' and which forms one of the two wedge-like abutment surfaces 13, 14 is connected to the first portion 13' in such a manner that a counter-abutment pin of the calliper 2 can be supported along a first contact line on the first portion 13' and along a second contact line on the second portion 13 of the surface. The contact force which acts on the first contact line is substantially developed by the spring 11 and the contact force which acts on the second contact line is the resultant contact force C described above. The friction forces which are developed along the various contact lines effectively prevent relative movement between the pad 7 and the pins of the calliper 2, thereby ensuring operation of the brake free from vibrations and noise.

The seats 10 formed on the lateral walls 5 of the calliper 2 are of a form suitable for receiving the pads 7 and are provided with the above-mentioned counter-abutment means which are produced, as already mentioned above, as one or more pins 24, 25, 26 which protrude from the lateral wall 5 of the calliper 2.

According to one embodiment of the invention, the abutment means comprise two pins 24, 25 which protrude from the calliper 2 and which are spaced so that one can engage with the first abutment surface 13 and the other with the second abutment surface 14 of the dovetail-like piece 15 of the pad.

As can be seen from the Figures, the two counter-abutment pins 24, 25 are arranged in the region of the two mutually opposed seats or grooves which are formed by the narrowing or tapering of the dovetail-like piece 15.

Alternatively, there can be provided a single pin having two surfaces, one of which engages with the first abutment surface and the other with the second abutment surface of the pad, always so as to produce the wedging effect during braking.

Another (third) pin 26 protrudes from the seat 10 at the position of the eyelet 19 or the jaw 20 of the pad 7. This additional pin 26 forms, together with the eyelet 19 or the jaw 20 of the pad, engagement or guiding means for the pad.

The corner radius of the rounded corners of the eyelet 19 is advantageously less than the radius of the third counter-abutment pin 26 of the calliper, so as to produce, during braking with backward motion, two contact lines between the pin and the eyelet. The resilient force S of the spring 11 acts on one of these two contact lines and the reaction force R relative to the braking force A acts on the other contact line.

According to the embodiment illustrated in Figures 1 and 3, the calliper 2 comprises another projection or pin 27 which is arranged above (or radially outside) the seat 10 for the pad 7 and which can form a seat of engagement for a central portion 28 of the spring 11, whose outer or end portions 29 engage with the two hook-shaped seats 22 of the pad.

According to the embodiment shown in Figures 4 and 5, the spring(s) 11 which is/are fixed to the pad in an unlosable manner are supported by means of the ends 30 thereof against suitable seats 31 which are formed on the connection elements or bridges 6 between the two lateral walls 5 of the calliper.

The operation of the disk brake according to the invention will now be described below.

When the brake is not being operated, each pad bears, owing to resilient force S of the springs 11, against the counter-abutment pins of the calliper along at least two contact lines. Furthermore, two contact lines are formed between the springs and the calliper (Figure 4) or a contact line is formed between the spring and the calliper plus two contact lines between the spring and the pad (Figure 1). The resilient force acting on these contact lines produces corresponding transverse friction resistance which prevents movement and therefore vibrations, rattling and noise of the pads.

During braking, the pads are thrust against the braking band which is rotating and clamp the braking band with friction. The braking band in turn pulls the pads along in the circumferential direction F of the brake disk in such a manner that the dovetail-like piece which is arranged at the rear side of the pad is positioned by means of the two inclined abutment surfaces on the two counter-abutment pins, thereby retaining the pad which is completely taut and at least partially wedged.

The pad which is supported in this manner inside the calliper is free from vibrations and the friction coating is subjected to very uniform wear.

During braking with backward movement, the braking band draws the pads along in the circumferential direction B of the brake disk in such a manner that either the pin 26 engages with the eyelet 19 (Figure 1) and/or the support surfaces 21 which are arranged at the rear side of the pad are positioned on the two counter-abutment pins 24, 25, thereby retaining the pad.

Naturally, in order to comply with specific and contingent requirements the person skilled in the art could apply to the disk brake according to the present invention further modifications and variations which are all, however, contained within the scope of protection of the invention, as defined by the appended claims.

## Claims

1. disk brake (1), in particular for motor vehicles, comprising:
- a calliper (2) which can extend astride a braking band (4) of a brake disk (3);
- two pads (7) which are received in suitable seats (10) of the calliper (2) and which are arranged at either side of the brake disk (3),
wherein the pads (7) comprise abutment means which can bear, owing to a braking force (A) which acts on the pads (7), against corresponding counter-abutment means of the calliper (2),
wherein the abutment means comprise two abutment surfaces (13, 14) which are mutually inclined so as to produce, during braking, a wedging effect together with the counter-abutment means,
***characterized in that** the counter-abutment means are formed as one or more pins (24, 25) protruding form a lateral wall (5) of the caliper (2), the pad (7) comprising a third abutment surface (17) which Is arranged at the front side of the pad (7) when viewed in the forward direction of rotation of the brake disk (3), which side is opposite that forming the first abutment surface* (13) *and second abutment surface (14), the third abutment surface (17) being formed by the inner surface of an eyelet* (19) or *by the inner surface of a jaw (20) formed at the front side of the pad* (7) *and arranged* so *as to be supported against* a *further pin* (26) *of the caliper (2).*

2. A disk brake (1) according to claim 1, wherein at least one of the abutment surfaces (13, 14) is inclined at an acute angle relative to a centre line (M) of the pad (7) which is substantially tangential to the braking band (4).

3. A disk brake (1) according to claim 1 or 2, wherein both the abutment surfaces (13, 14) are non-perpendicular to the centre line (M).

4. A disk brake (1) according to any one of the preceding claims, wherein the pad (7) comprises a support piece (15) which is substantially of dovetail-like form and which delimits two mutually opposed seats which form the two abutment surfaces (13, 14) and wherein the counter-abutment means (24, 25, 26) comprise two pins (24, 25) which are arranged in the two seats formed by the support piece (15).

5. A disk brake (1) according to any one of the preceding claims, wherein the two abutment surfaces (13, 14) together define an angle (2α) of between 50° and 100°.

6. A disk brake (1) according to either claim 4 or claim 5, wherein the support piece (15) is formed at the rear side (16) of the pad (7) relative to the forward direction of rotation (F) of the brake disk (3).

7. A disk brake (1) according to any one of claims 4 to 6, wherein the dovetail-like piece (15) is formed and arranged in a substantially symmetrical manner relative to the centre line (M) of the pad (7).

8. A disk brake (1) according to any one of claims 4 to 7, wherein the dovetail-like piece (15) forms a surface having a first portion (13') which is substantially parallel with the centre line (M) of the pad (7), and a second portion (13), which is inclined relative to the first portion (13') and which produces one of the two wedge-like abutment surfaces (13, 14), is connected to the first portion (13') in such a manner that a counter-abutment pin of the calliper (2) can simultaneously be supported along a first contact line on the first portion (13') and along a second contact line on the second portion (13) of the surface.

9. A disk brake (1) according to claim 1, wherein the third abutment surface (17) is formed by the inner surface of a jaw (20) which is formed at the front side of the pad (7), and
wherein the jaw (20) is open (in the circumferential direction of the disk) towards the outer side of the front side (18) of the pad (7).

10. A pad (7) for a disk brake (1), the pad comprising abutment means which can bear, owing to a braking force (A) which acts on the pad (7), against corresponding counter-abutment means (24, 25) of the disk brake,
wherein the abutment means comprise *a first and a second abutment surface* (13, 14) which are mutually inclined so as to produce, during braking, a wedging effect together with the counter-abutment means, for example, pins (24, 25),
***characterized in that** the pad (7) comprises* a *third abutment surface (17) which is arranged at the side of the pad (7) opposite that forming the first abutment surface (13) and second abutment surface (14), the third abutment surface (17) being formed by the inner surface of an eyelet (19) or by the Inner surface of a jaw (20) and arranged so as to be supported against a pin (26) of* a *caliper (2) of said disk brake.*

11. A pad (7) according to claim 10, comprising a support piece (15) which is substantially of dovetail-like form and which delimits two mutually opposed seats which form the two abutment surfaces (13, 14).

12. A pad (7) according to claim 10 or 11, wherein the two abutment surfaces (13, 14) together define an angle (2α) of between 10° and 160°.

13. A pad (7) according to claim 12, wherein the two abutment surfaces (13, 14) together define an angle (2a) of between 50° and 100°.

14. A pad (7) according to claim 13, wherein the two abutment surfaces (13, 14) together define an angle (2α) of approximately 90°.

15. A pad (7) according to any one of claims 10 to 14, wherein the support piece (15) is formed at the rear side (16) of the pad (7) relative to the forward direction of rotation (F) of a brake disk (3) of the disk brake.

16. A pad (7) according to claim 10, wherein the third abutment surface (17) is formed by the inner surface of a jaw (20) (7), and
wherein the jaw (20) is open towards the outer side (18) of the pad (7).

## Patentansprüche

1. Scheibenbremse (1), insbesondere für Kraftfahrzeuge, umfassend:
- einen Bremssattel (2), welcher sich rittlings über einem Bremsband (4) einer Bremsscheibe (3) erstreckt;
- zwei Beläge (7), welche in geeigneten Sitzen (10) des Bremssattels (2) aufgenommen sind und welche auf jeder Seite der Bremsscheibe (3) angeordnet sind,
wobei die Beläge (7) Anschlagmittel umfassen, welche aufgrund einer Bremskraft (A), welche auf die Beläge (7) wirkt, gegen die entsprechenden Gegenanschlagmittel des Bremssattels (2) drücken,
wobei die Anschlagmittel zwei Anschlagflächen (13, 14) umfassen, welche derart zueinander geneigt sind, dass während des Bremsens ein Keileffekt zusammen mit den Gegenanschlagmitteln entsteht,
**dadurch gekennzeichnet, dass** die Gegenanschlagmittel als ein oder mehrere Stifte (24, 25) ausgebildet sind, welche von einer Seitenwand (5) des Bremssattels (2) vorstehen, wobei der Belag (7) eine dritte Anschlagfläche (17) umfasst, welche, wenn in Vorwärtsrichtung der Rotation der Bremsscheibe (3) betrachtet, an der Vorderseite des Belags (7) angeordnet ist, welche sich gegenüber derjenigen befindet, welche die erste Anschlagfläche (13) und die zweite Anschlagfläche (14) bildet, wobei die dritte Anschlagfläche (17) von der Innenfläche einer Öse (19) oder von der Innenfläche einer Klaue (20) gebildet ist, welche an der Vorderseite des Belags (7) gebildet und derart angeordnet ist, dass sie gegen einen weiteren Stift (26) des Bremssattels (2) gestützt ist.

2. Scheibenbremse (1) nach Anspruch 1, wobei wenigstens eine der Anschlagflächen (13, 14) in einem spitzen Winkel relativ zu einer Mittellinie (M) des Belags (7) geneigt ist, welche im Wesentlichen tangential zu dem Bremsband (4) ist.

3. Scheibenbremse (1) nach Anspruch 1 oder 2, wobei beide Anschlagflächen (13, 14) nicht senkrecht zu der Mittellinie (M) sind.

4. Scheibenbremse (1) nach einem der vorhergehenden Ansprüche, wobei der Belag (7) ein Stützelement (15) umfasst, welches im Wesentlichen eine Schwalbenschwanz förmige Form aufweist und welche zwei einander gegenüber liegende Sitze begrenzt, welche die beiden Anschlagflächen (13, 14) bilden und wobei die Gegenanschlagmittel (24, 25, 26) zwei Stifte (24, 25) umfassen, welche in den beiden Sitzen angeordnet sind, welche von den Stützelementen (15) gebildet sind.

5. Scheibenbremse (1) nach einem der vorhergehenden Ansprüche, wobei die beiden Anschlagflächen (13, 14) zusammen einen Winkel (2α) von zwischen 50° und 100° definieren.

6. Scheibenbremse (1) nach Anspruch 4 oder Anspruch 5, wobei das Stützelement (15) an der Rückseite (16) des Belags (7) relativ zu der Vorwärtsrichtung der Rotation (F) der Scheibenbremse (3) gebildet ist.

7. Scheibenbremse (1) nach einem der Ansprüche 4 bis 6, wobei das Schwalbenschwanz förmige Element (15) in einer im Wesentlichen symmetrischen Weise relativ zu der Mittellinie (M) des Belags (7) gebildet und angeordnet ist.

8. Scheibenbremse (1) nach einem der Ansprüche 4 bis 7, wobei das Schwalbenschwanz förmige Element (15) eine Fläche bildet, welche einen ersten Abschnitt (13') aufweist, welcher im Wesentlichen parallel zu der Mittellinie (M) des Belags (7) ist und einen zweiten Abschnitt (13) aufweist, welcher relativ zu dem ersten Abschnitt (13') geneigt ist und welcher eine der beiden keilförmigen Anschlagflächen (13, 14) erzeugt, welcher mit dem ersten Abschnitt (13') in einer derartigen Weise verbunden ist, dass ein Gegenanschlagsstift des Bremssattels (2) gleichzeitig entlang einer ersten Kontaktlinie an dem ersten Abschnitt (13') und entlang einer zweiten Kontaktlinie an dem zweiten Abschnitt (13) der Fläche stützbar ist.

9. Scheibenbremse (1) nach Anspruch (1), wobei die dritte Anschlagfläche (17) von der Innenfläche einer Klaue (20) gebildet ist, welche an der Vorderseite des Belags (7) gebildet ist und wobei die Klaue (20) in Richtung der Außenseite der Vorderseite (18) des Belags (7) offen ist (in Umfangsrichtung der Scheibe).

10. Belag (7) für eine Scheibenbremse (1), wobei der Belag umfasst: Anschlagmittel, welche aufgrund einer Bremskraft (A), welche auf den Belag (7) wirkt, gegen entsprechende Gegenanschlagmittel (24, 25) der Scheibenbremse drücken, wobei die Anschlagmittel eine erste und eine zweite Anschlagfläche (13, 14) umfassen, welche derart zueinander geneigt sind, dass während des Bremsens ein Keileffekt zusammen mit den Gegenanschlagmitteln, zum Beispiel Stiften (24, 25), entsteht, **dadurch gekennzeichnet, dass** der Belag (7) eine dritte Anschlagfläche (17) umfasst, welche an der Seite des Belags (7) angeordnet ist, welche sich gegenüber derjenigen befindet, welche die erste Anschlagfläche (13) und die zweite Anschlagfläche (14) bildet, wobei die dritte Anschlagfläche (17) von der Innenfläche einer Öse (19) oder von der Innenfläche einer Klaue (20) gebildet ist und derart angeordnet ist, dass sie gegen einen Stift (26) eines Bremssattels (2) der Scheibenbremse gestützt ist.

11. Belag (7) nach Anspruch 10, umfassend ein Stützelement (15), welches im Wesentlichen eine Schwalbenschwanz förmige Form aufweist und welche zwei einander gegenüberliegende Sitze begrenzt, welche die zwei Anschlagflächen (13, 14) bilden.

12. Belag (7) nach Anspruch 10 oder 11, wobei die beiden Anschlagflächen (13, 14) zusammen einen Winkel (2α) von zwischen 10° und 160° definieren.

13. Belag (7) nach Anspruch 12, wobei die beiden Anschlagflächen (13, 14) zusammen einen Winkel (2α) von zwischen 50° und 100° definieren.

14. Belag (7) nach Anspruch 13, wobei die beiden Anschlagflächen (13, 14) zusammen einen Winkel (2α) von ungefähr 90° definieren.

15. Belag (7) nach einem der Ansprüche 10 bis 14, wobei das Stützelement (15) an der Rückseite (16) des Belags (7) relativ zu der Vorwärtsrichtung der Rotation (F) einer Bremsscheibe (3) der Scheibenbremse gebildet ist.

16. Belag (7) nach Anspruch 10, wobei die dritte Anschlagfläche (17) von der Innenfläche einer Klaue (20) gebildet ist und wobei die Klaue (20) in Richtung der Außenseite (18) des Belags (7) offen ist.

## Revendications

1. Frein à disque (1), en particulier pour des véhicules à moteur, comprenant :
un étrier (2) qui peut s'étendre à califourchon sur une bande de freinage (4) d'un disque de frein (3) ;
deux patins (7) qui sont reçus dans des sièges convenables (10) de l'étrier (2) et qui sont agencés des deux côtés du disque de frein (3),
dans lequel les patins (7) comprennent des moyens de butée qui peuvent s'appuyer, grâce à une force de freinage (A) qui agit sur les patins (7), contre des moyens de contre-butée correspondants de l'étrier (2),
dans lequel les moyens de butée comprennent deux surfaces de butée (13, 14) qui sont inclinées mutuellement de façon à produire, pendant le freinage, un effet de coincement conjointement avec les moyens de contre-butée,
**caractérisé en ce que** les moyens de contre-butée sont formés comme un ou plusieurs plots (24, 25) faisant saillie depuis une paroi latérale (5) de l'étrier (2), le patin (7) comprenant une troisième surface de butée (17) qui est agencée du côté avant du patin (7) vu dans la direction de rotation vers l'avant du disque de frein (3), lequel côté est opposé à celui formant la première surface de butée (13) et la seconde surface de butée (14), la troisième surface de butée (17) étant formée par la surface intérieure d'un oeillet (19) ou par la surface intérieure d'une mâchoire (20) formée du côté avant du patin (7) et agencée de façon à être supportée contre un autre plot (26) de l'étrier (2).

2. Frein à disque (1) selon la revendication 1, dans lequel au moins l'une des surfaces de butée (13, 14) est inclinée à un angle aigu par rapport à une ligne centrale (M) du patin (7) qui est sensiblement tangente à la bande de freinage (4).

3. Frein à disque (1) selon la revendication 1 ou 2, dans lequel les deux surfaces de butée (13, 14) ne sont pas perpendiculaires à la ligne centrale (M).

4. Frein à disque (1) selon l'une quelconque des revendications précédentes, dans lequel le patin (7) comprend une pièce de support (15) qui est sensiblement en queue d'aronde et délimite deux sièges mutuellement opposés qui forment les deux surfaces de butée (13, 14) et dans lequel les moyens de contre-butée (24, 25, 26) comprennent deux plots (24, 25) qui sont agencés dans les deux sièges formés par la pièce de support (15).

5. Frein à disque (1) selon l'une quelconque des revendications précédentes, dans lequel les deux surfaces de butée (13, 14) définissent ensemble un angle (2α) d'entre 50° et 100°.

6. Frein à disque (1) selon la revendication 4 ou 5, dans lequel la pièce de support (15) est formée du côté arrière (16) du patin (7) par rapport à la direction de rotation vers l'avant (F) du disque de frein (3).

7. Frein à disque (1) selon l'une quelconque des revendications 4 à 6, dans lequel la pièce en queue d'aronde (15) est formée et agencée d'une manière sensiblement symétrique par rapport à la ligne centrale (M) du patin (7).

8. Frein à disque (1) selon l'une quelconque des revendications 4 à 7, dans lequel la pièce en queue d'aronde (15) forme une surface ayant une première partie (13') qui est sensiblement parallèle à la ligne centrale (M) du patin (7), et une seconde partie (13), qui est inclinée par rapport à la première partie (13') et qui produit une des deux surfaces de butée en coin (13, 14), est connecté à la première partie (13') de telle manière qu'un plot de contre-butée de l'étrier (2) peut être supporté simultanément le long d'une première ligne de contact sur la première partie (13') et le long d'une seconde ligne de contact sur la seconde partie (13) de la surface.

9. Frein à disque (1) selon la revendication 1, dans lequel la troisième surface de butée (17) est formée par la surface intérieure d'une mâchoire (20) qui est formée au niveau du côté avant du patin (7), et
dans lequel la mâchoire (20) est ouverte (dans la direction circonférentielle du disque) vers le côté extérieur du côté avant (18) du patin (7).

10. Patin (7) pour un frein à disque (1), le patin comprenant des moyens de butée qui peuvent s'appuyer, grâce à une force de freinage (A) qui agit sur le patin (7), contre des moyens de contre-butée (24, 25) correspondants du frein à disque,
dans lequel les moyens de butée comprennent une première et une seconde surfaces de butée (13, 14) qui sont inclinées mutuellement de façon à produire, pendant le freinage, un effet de coincement conjointement avec les moyens de contre-butée, par exemple, des plots (24, 25),
**caractérisé en ce que** le patin (7) comprend une troisième surface de butée (17) qui est agencée du côté du patin (7) opposé à celui formant la première surface de butée (13) et la seconde surface de butée (14), la troisième surface de butée (17) étant formée par la surface intérieure d'un oeillet (19) ou par la surface intérieure d'une mâchoire (20) et agencée de façon à être supportée contre un plot (26) d'un étrier (2) dudit frein à disque.

11. Patin (7) selon la revendication 10, comprenant une pièce de support (15) qui est sensiblement en forme de queue d'aronde et qui délimite deux sièges mutuellement opposés qui forment les deux surfaces opposées (13, 14).

12. Patin (7) selon la revendication 10 ou 11, dans lequel les deux surfaces de butée (13, 14) définissent ensemble un angle (2α) d'entre 10° et 160°.

13. Patin (7) selon la revendication 12, dans lequel les deux surfaces de butée (13, 14) définissent ensemble un angle (2α) d'entre 50° et 100°.

14. Patin (7) selon la revendication 13, dans lequel les deux surfaces de butée (13, 14) définissent ensemble un angle (2α) d'approximativement 90°.

15. Patin (7) selon l'une quelconque des revendications 10 à 14, dans lequel la pièce de support (15) est formée du côté arrière (16) du patin (7) par rapport à la direction de rotation vers l'avant (F) d'un disque de frein (3) du frein à disque.

16. Patin (7) selon la revendication 10, dans lequel la troisième surface de butée (17) est formée par la surface intérieure d'une mâchoire (20), et
dans lequel la mâchoire (20) est ouverte vers le côté extérieur (18) du patin (7).
